# EUROPEAN PATENT APPLICATION

(11) **EP 4 814 296 A1**
(43) Date of publication of application: **30.09.2026**
(21) Application number: 25166203.7
(22) Date of filing: 26.03.2025
(51) Int. Cl.: F03D 7/02

(54) **METHOD FOR CONTROLLING A WIND TURBINE UNDER REVERSE ROTATION, AND ASSOCIATED CONTROL SYSTEM**

(71) Applicant: Siemens Gamesa Renewable Energy A/S, 7330 Brande (DK)
(72) Inventor: Montarnal, Philippe, 7100 Vejle (DK); Vavatsikos, Panagiotis, 2500 Valby (DK); Hoegh, Gustav, 7100 Vejle (DK)
(74) Representative: SGRE-Association

(57) **Abstract**

A method of operating a wind turbine, the method comprising determining a rotational speed of a main rotor of the wind turbine, determining a rotational direction of the main rotor, identifying a reverse overspeed condition when the rotational speed of the wind turbine rotor exceeds a predefined rotational speed limit and the rotational direction is reverse, and in particular, upon determining that the reverse overspeed condition persists for at least a threshold duration, initiating a mitigation action to reduce or halt the reversed rotational speed.

## Description

### TECHNICAL FIELD

The present disclosure is related generally to methods controlling the rotational behavior of a wind turbine rotor, including detecting and mitigating reverse overspeed conditions which may cause damage on wind turbine components. It further relates to a respective control system and computer program.

### BACKGROUND

Wind turbines are designed to operate under controlled conditions to maximize energy production while minimizing mechanical stress.

More in particular, the rotors of most modern industrial wind turbines rotate clockwise during normal operation, as seen by an observer looking downwind. When the wind turbine is not operating, for example in low wind conditions or when the grid is saturated, the wind turbine is operated in an inactive operating mode. In such an inactive operating mode, the wind turbine rotor may be allowed to rotate freely and in particular may be allowed to also rotate in a direction opposite to the operating rotational direction, e.g. counterclockwise. However, as the rotor of wind turbines is designed and optimized to rotate in the operating rotational direction in order to efficiently capture wind energy and convert it into electricity, this can lead to conditions for which the mechanical components of the wind turbine are not designed. The rotor of the wind turbine is typically coupled to a drivetrain that is designed to handle torque and forces in a specific normal operational rotating direction of the wind turbine rotor. Such reverse rotation may put stress on the drivetrain components, including gears, bearings, and shafts.

Reverse rotation, meaning a rotation contrary to which the wind turbine was designed for, can lead to significant mechanical and electrical deterioration, affecting the long-term reliability of the turbine.

One critical component of concern is the gearbox, which is typically optimized for torque transmission in a single direction. Reverse loading can induce abnormal stress on planetary and helical gears, leading to misalignment, increased wear, and potential failure due to excessive backlash. Similarly, the generator, particularly in systems utilizing a doubly fed induction generator (DFIG) or synchronous generator, is vulnerable to damage when subjected to reverse torque. Improper excitation under reverse conditions can result in harmonic instability, overheating, and insulation breakdown, ultimately leading to premature generator failure.

Pitch bearings and actuators experience forces in directions they are not designed to withstand, increasing the risk of hydraulic failures, bearing misalignment, and component fatigue. Additionally, the braking system, which is intended to slow or stop the rotor during maintenance or extreme wind conditions, may engage improperly or unevenly under reverse rotation, leading to excessive wear, overheating, or loss of braking efficiency.

The yaw system, responsible for aligning the turbine with wind direction, can also suffer from unintended stress when the rotor spins in reverse. Unexpected torque on the yaw drive and bearings may accelerate wear, cause misalignment, or even lead to structural fatigue over time. Furthermore, the main shaft and bearings, which experience carefully controlled loading in normal operation, may be subjected to improper axial and radial forces during reverse rotation. If lubrication systems are not designed for bidirectional operation, this can result in increased friction, overheating, and accelerated wear of critical components.

In addition to mechanical failures, reverse rotation can have adverse effects on power electronics, particularly in turbines that rely on converters, inverters, and other control systems. If not properly accounted for, reverse rotation may generate overvoltage conditions, current spikes, or erratic control responses, potentially leading to the failure of power semiconductor components such as IGBTs or capacitors.

Thus, it is desirable to avoid such stress acting on the wind turbine components and in particular to reduce the risk of damage to components which may occur by rotation in reverse direction. It is further desirable to protect the electrical system, such as generator and power converter, from negative effects that may occur when the wind turbine is in a respective idle state and the rotor is allowed to rotate freely.

### SUMMARY

It has been found that wind turbines can in certain contexts rotate in a reverse direction of rotation for a significant amount of time below cut-in speeds, namely, rotating contrary to the direction of rotation in which they were designed, causing damage to components of the wind turbine. This previously overlooked phenomenon may highly be an unrecognized/unaddressed problem.

Within the meaning of the invention, cut-in speed may be understood to an initial speed (rotational or wind speed) comprising the initiation of a power producing mode wherein the wind turbine is rotated to produce power. Therefore, below cut-in speeds, the wind turbine rotates not producing power, for example, in an idling mode.

After reaching or surpassing such cut-in speeds, there is typically a protective automatic shutdown of the power converter when detecting an abnormal electric condition. In other words, when the converter detects an electrical issue that could lead to electrical faults or damage, as a consequence of reverse rotation, it trips - meaning it automatically disconnects or shuts down to protect itself and other turbine components.

However, it has been found that below cut in speeds, the rotor may rotate for a significant amount of time without a stopping or mitigating action, potentially damaging or inducing wear on components. Furthermore, it may reach cut in speeds in reverse direction at considerable rotor speeds, further damaging components upon sudden shut down.

Reverse rotation of a wind turbine rotor can occur due to aerodynamic effects, such as vortex shedding or turbulence, especially if the one or more blades are stalled or at a high pitch angle. Wake effects from nearby turbines, or bearing asymmetries may further contribute, causing the rotor to rotate in the direction of least resistance. Other phenomenon for such reverse rotation may occur.

It is therefore an object of the disclosure to overcome at least some drawbacks mentioned above, in particular to reduce the risk of damage to structural and/or electrical components of a wind turbine, which may be caused by rotation of the wind turbine rotor in a reverse rotational direction.

This need is met by the features of the independent claims. The dependent claims describe embodiments of the invention.

In a first aspect, this disclosure relates to a method of operating a wind turbine when the turbine's main rotor is detected as rotating in a reverse direction at speeds exceeding a threshold. By identifying and responding to this reverse overspeed condition, the invention aims to protect turbine components from damage and improve overall operational safety.

The wind turbine comprises a wind turbine rotor that is configured to rotate in an operating rotational direction during power production by the wind turbine.

In some embodiments, the steps of the method are only performed below cut-in speeds. Nothwithanding, it may be performed (e.g. implemented in a control system) as a further redundancy control. Therefore, the method of operating the wind turbine within the context of this disclosure, in some embodiments, may be interpreted as a method of operating a wind turbine while under cut-in speeds, meaning under conditions below which the wind turbine is not producing power (e.g. under standstill or idling operational modes).

The method may involve determining both the rotational speed of the main rotor and its rotational direction. These measurements may be performed by standard turbine sensors or any equivalent sensing apparatus capable of monitoring rotor conditions.

For example, the above measurements may be performed by one or more sensing devices, which may comprise an optical encoder, an accelerometer installed in a hub of the wind turbine rotor, and/or a rotational speed sensor installed in the hub, on a shaft, on a generator or on another component that rotates with the wind turbine rotor.

In a further step, a reverse overspeed condition may be identified, namely, when the determined (e.g. measured) rotor speed exceeds a predefined rotational speed limit while the rotor's direction is reverse. This step ensures that mere slow-speed reverse rotation (e.g. from gusts) does not trigger unnecessary alarms or actions.

Once the reverse overspeed condition is identified, the method comprises initiating a mitigation action to counteract such reverse overspeed.

In some embodiments, the method may further determine whether the reverse overspeed has persisted for at least a threshold duration, which can include a zero interval if immediate mitigating action is desired. If so, the turbine initiates a mitigating action of the wind turbine rotor essentially immediately.

In some embodiments, It may be convenient that the threshold duration is a positive time interval, to account for transients and thus not stopping the rotor more than strictly required.

The mitigating action could involve switching to an idling mode, a mechanical braking, an aerodynamic braking, blade pitch adjustments (e.g. pitching one blade or pitching all of the one or more blades by a collective pitching), spoilers, exerting a generator torque, or other mechanisms to halt the rotor.

Using such a method for controlling the operation of a wind turbine may provide several advantages. The probability for a reverse overspeed condition of the rotor that may result in potentially damaging stress on the rotor one or more blades, bearings, and other mechanical components may be reduced significantly. By employing the method, increased loading or wear on the rotor one or more blades, bearings, and other mechanical components of the wind turbine may be avoided. Furthermore, as the rotor is coupled to the drivetrain of the wind turbine, premature wear of the drivetrain components coupled to the rotor due to a reverse loading compared to the operation in operational rotating direction of the wind turbine may be avoided. As a result, maintenance and repair intervals may be prolonged, and frequency of potentially costly replacements may be reduced significantly. As a result, the wind turbine may have less downtime for maintenance, which may result in a more cost-effective operation of the wind turbine. Additionally, a reverse overspeed condition may lead to a trip of the electrical power generating system, e.g. of the power converter, since the rotational speed may reach the cut-in speed in reverse direction and the wind turbine may cut-in. As the power generating system is only designed for operation in the conventional operating rotational direction, the power generating system may trip. This may result in a shutdown of the wind turbine. By employing the method, a shutdown of the wind turbine due to the tripping of the power generating system may be avoided.

In some embodiments, the method further checks whether the turbine is in a mode where a mitigation action (e.g. a rotor-stopping action) are permitted (for example, a standard parking mode vs versus a special maintenance or installation mode). Thus, only if the turbine is in a permitted mode and the reverse overspeed persists for the threshold duration will the mitigation action (e.g. a forced stop) be triggered. This ensures that in certain operations- such as rotor installation or specific servicing tasks- an unplanned mitigation action is not performed.

In an embodiment, the method comprises operating the wind turbine in an inactive operating mode (e.g. Below cut-in speeds) in which the wind turbine does not generate power. Therefore, determination on whether the reverse overspeed condition exists is performed in below cut-in speeds (e.g. in an inactive mode, for example, idle).

If the wind turbine is not operated in the inactive mode, e.g. during power production or in a service mode, it may not be determined if the reverse overspeed condition exists and taking the mitigation action may be avoided. Thus, the method may comprise a step of determining whether a mitigation action can be performed (e.g. by checking the operational mode: inactive, service mode, etc.).

In an example, the inactive operating mode may be employed in low wind conditions that may not be strong enough to cause the rotor to rotate to generate electrical power (i.e. below cut in speeds) or in situations in which the grid is saturated and additional electrical power supplied by the wind turbine may not be required.

In an example, the inactive operating mode may correspond to an idle mode of the wind turbine. Specifically, the inactive operating mode may correspond to an active idle mode or to a passive idle mode of the wind turbine.

The active idle mode of the wind turbine may correspond to a mode in which the rotor of the wind turbine is allowed to (freely) rotate under action of the prevailing aerodynamic forces. This may help keep bearings lubricated and prevent components from becoming completely static for extended periods. This slow rotation may be actively managed and controlled by a pitch control, which adjusts the angle of the one or more blades, and yaw control, which adjusts the orientation of the wind turbine relative to the wind. Thus, the wind turbine may be kept ready for operation while it may not produce electrical power.

The passive idle mode of the wind turbine may correspond to a mode in which the power generation system is not grid connected and the one or more blades are pitched to a stop position (e.g. feathered position). In such position, the rotation of the wind turbine rotor may be substantially stopped, i.e. does not rotate or rotate very slowly. For example, in the passive idle mode, the systems of the wind turbine may not be running except for basic monitoring. The rotor one or more blades may be fully feathered, and the generator may be completely idle. The yaw direction may be set at a fixed angle.

In an embodiment, the rotational speed limit corresponds to a rotational speed of less than 2 rpm, preferably less than 1 rpm, more preferably lies within a range between 0.01 and 0.5 rpm.

The rotational speed limit could be lower than 0.5rpm and even lower than 0.01 rpm as long it is above a noise level or error of the sensors configured for retrieving a parameter relating to rotational speed.

By setting the rotational speed limit to a rotational speed that corresponds to less than 2 rpm, conditions in which the wind turbine is rotating in a reverse direction with a speed that the components of the rotor are not designed for may be avoided. Setting the rotational speed limit even lower may be even more beneficial, as it allows taking the mitigation action already at speeds that are not yet harmful for the components of the wind turbine. Thus, unfavorable loads on the components of the wind turbine may be avoided efficiently, which may lead to a reduced wear of these components and reduced risk of damage.

In an embodiment, it is determined that the reverse overspeed condition exists if the reverse rotational speed of the wind turbine rotor exceeds the rotational speed limit over a predetermined time period.

By additionally using a predetermined time period during which the wind turbine rotor needs to exceed the rotational speed limit in order to determine that a reverse overspeed condition exists, it may be avoided that the mitigation action is taken if the reverse overspeed limit is only reached for a short amount of time (shorter than the predetermined time period). Thus, the mitigation action may only be taken if it is really necessary.

In an embodiment, the predetermined time period corresponds to less than 10 s, preferably less than 7 s. The predetermined time period may lie within a range between 0.5 and 6 s, in particular between 2 and 5 s.

By setting a predetermined time period to less than 10 s, it may be avoided that the mitigation action is taken if the rotational speed limit has been exceeded for only a short time. The existence of the reverse overspeed condition may therefore only be determined when the limit has been exceeded over the predetermined time period. By keeping the predetermined time period lower than 10 s, it may be determined in a faster way that the reverse overspeed condition exists, such that the mitigation action may be taken earlier. Thus, potential damages to the mechanical components of the rotor and also potentially the drivetrain of the wind turbine due to a reverse overspeed condition may be avoided more efficiently.

In an embodiment, the mitigation action comprises one or a combination of switching the operation into a passive idle mode of the wind turbine (e.g. if the wind turbine is operated in an active idle mode and it is determined that the reverse overspeed condition exists), pitching of one or more blades of the wind turbine rotor, stopping rotation of the wind turbine rotor, applying a brake to a main shaft of the wind turbine rotor or to a component which is coupled thereto, or adjusting a yaw angle of the wind turbine.

For example, by pitching the rotor one or more blades and/or adjusting the yaw angle, the direction at which the wind hits the rotor one or more blades may be adjusted so as to reduce the reverse rotation speed.

The passive idle mode of the wind turbine may correspond to a condition in which the rotor one or more blades of the wind turbine are pitched towards a feathered position and the generator is disconnected from the power grid. By pitching the rotor one or more blades of the wind turbine towards the feathered position, the rotation of the rotor may be deaccelerated and the reverse overspeed condition may be mitigated. It may be also possible to only pitch one rotor blade of the wind turbine in order to mitigate the reverse overspeed condition. Thus, the activation of the passive idle mode of the wind turbine and also the disconnection of the generator from the grid may be avoided. By stopping the rotation of the wind turbine rotor completely, the overspeed condition may be mitigated efficiently.

In an embodiment, taking the mitigation action comprises a complete stop of the rotation of the wind turbine rotor.

By completely stopping the rotor of the wind turbine during a reverse overspeed condition, damages to the mechanical components due to reverse loading of the components of the wind turbine may be avoided.

In an embodiment, taking the mitigation action comprises bringing the rotational speed of the wind turbine rotor below the rotational speed limit.

By bringing the rotational speed of the wind turbine rotor below the rotational speed limit, the wind turbine rotor may still be allowed to rotate in the reverse rotational direction while the mitigation action is taken. Thus, the taking of additional mitigation actions, e.g. switching from an active idle mode into a passive idle mode of the wind turbine or stopping the wind turbine, which are not strictly necessary in order to avoid a reverse overspeed condition, may be avoided while still mitigating the risk of damage to the mechanical components and/or the drivetrain. Thus, a reduced loading of these components and reduced wear may still be obtained.

In an embodiment, the mitigation action is deactivated if the rotational speed is below the rotational speed limit, preferably for a preset time period.

Thereby, the stress and wear on the mechanical brakes that may be employed in order to mitigate the overspeed condition may be reduced. By employing a preset time period before the mitigation action is deactivated, it may be ensured that the condition that led to a rotational speed above the rotational speed limit in reverse direction is not present anymore. The preset time period may be less than 60 s, preferably less than 30 s. The preset time period may lie within a range between 10 and 30 s.

In an embodiment, the deactivation of the mitigation action comprises switching the operation of the wind turbine to an idle mode, in particular to an active idle mode or a passive idle mode. The operation may in particular return to the operating mode in which the wind turbine operated prior to activation of the mitigation action, or the wind turbine may be operated in a different mode after deactivation of the mitigation action. It should be clear that if the mitigation action comprises switching the operation into the passive idle mode, the deactivation of the mitigation action may comprise switching the operation to a different operating mode, such as the active idle mode.

Deactivating the mitigation action if the rotational speed is below the rotational speed limit and switching into an active idle mode may allow the wind turbine to (freely) rotate again. This may help to circulate lubricant within the gearbox and the main bearings of the wind turbine. Furthermore, rotor lock-up may be prevented and risks of ice accumulation, debris entanglement, or asymmetric loading may be reduced. In the active idle mode of the wind turbine, the power generation system of the wind turbine may remain synchronized with the grid but may be disconnected from the power production. Thus, by switching the operation of the wind turbine into an active idle mode, the wind turbine may resume electricity generation in a short time when wind speeds increases or grid demand returns. Furthermore, voltage and frequency stability may be maintained for seamless reconnection. By switching into an active idle mode when the mitigation action is deactivated, the wind turbine may thus be activated more effectively, if power production may be required.

In an example, the deactivation of the mitigation action comprises switching the operation of the wind turbine to a power generating operating mode of the wind turbine, in which, e.g., the wind turbine provides electrical power to the power grid. Thus, the wind turbine may be operated to generate electrical power directly after the deactivation of the mitigation action.

In an embodiment, the method further comprises determining if the wind turbine is operated in a service mode, wherein the mitigation action is only taken if the wind turbine is not operated in the service mode.

By only taking the mitigation action if the wind turbine is not operated in a service mode, taking the mitigation action may be avoided during service of the wind turbine. Thus, the wind turbine can be serviced without triggering the mitigation action.

In an example embodiment, the service mode may correspond to a maintenance mode or an installation mode of the wind turbine. Especially during the installation or maintenance of the wind turbine, the rotor may be rotated in reverse direction compared to the operating rotational direction. Thus, it may be beneficial to avoid taking the mitigation action during such service mode in order not to interfere with installation or maintenance operations.

In an example embodiment, when the wind turbine is operated in the service mode, monitoring may also be deactivated, meaning the method identifies that a mitigation action is not required, thus, for example, does not start to count. For example, the determination if a reverse overspeed condition exists is not performed under this context. Thus, power consumption and the use of resources may be kept as small as possible.

In an embodiment, the rotational speed and/or the rotational direction is determined by using one or more sensing devices.

A respective signal (e.g. corresponding to the rotational speed and/or direction) may be received from the one or more sensing devices or from another controller that determines the respective parameter using the one or more sensing devices.

The one or more sensing devices may be one or more sensing devices used by another function of the wind turbine and/or may be or comprise one or more sensing devices dedicated to the monitoring of the reverse rotation of the wind turbine rotor. By using sensing devices used by another function in order to determine the rotational speed and/or the rotational direction, hardware, installation, and wiring requirements may be kept as low as possible. Furthermore, additional signal processing and/or sensor synchronization may be avoided, and calibration and alignment may be facilitated. Furthermore, the space requirements may be kept as low as possible. Thus, a cost-effective integration may be enabled.

By using plural sensing devices in order to determine the rotational speed and/or the rotational direction, if one sensing device may fail or malfunction, the remaining sensing devices may continue providing data. This may prevent the total loss of the determination of the rotational speed and/or the rotational direction. Furthermore, using multiple sensing devices may compensate for individual measurement errors, e.g. mechanical vibrations, by averaging readings, resulting in a more accurate determination of the rotational speed and/or the rotational direction.

In an embodiment, the one or more sensing devices comprise an optical encoder, an accelerometer installed in a hub of the wind turbine rotor, and/or a rotational speed sensor installed in the hub, on a shaft, on a generator or on another component that rotates with the wind turbine rotor.

By using an optical encoder, the rotational speed and/or rotational direction may be determined with minimal latency and low signal to noise ratio. The one or more sensing devices may in particular comprise an incremental encoder. As the one or more sensing devices mentioned above may already be part of a wind turbine setup, an integration of the method into an already existing wind turbine setup may be facilitated. Furthermore, costs for additional sensing devices to be installed on the wind turbine may be avoided.

In an example, the method further comprises adaptive threshold durations that adjust automatically or dynamically according to changing environmental conditions (e.g., wind speed, temperature) or loads in a wind turbine component/s.

In some embodiments, the methods may trigger an alert or notification mechanisms that signal local or remote operators when a reverse rotation exceeding a threshold and/or when a mitigation action has been triggered.

The method can be embodied in software instructions stored on a non-transitory computer-readable medium. When executed by a controller or processor, these instructions cause the turbine's control system to carry out the steps of, inter alia, identifying a reverse overspeed, optionally checking permission to stop (operational state), and initiating the mitigating action within the predefined threshold duration.

Another aspect of the disclosure further provides a method for configuring a new or existing wind turbine to implement the above method. This involves providing or updating a control system with the required sensing, logic, and capability to execute the steps of the method (e.g. to detect reverse overspeed and stop the rotor according to any embodiment of the method aforementioned).

Therefore, according to a further aspect, a wind turbine comprising a respective control system is provided.

According to a further aspect of the present invention, a computer program for controlling the operation of a wind turbine that comprises a wind turbine rotor is provided. The computer program comprises control instructions which, when executed by a processing unit of a control system that controls the operation of the wind turbine, cause the processing unit to perform any of the methods disclosed herein. The computer program may be provided on a volatile or non-volatile data carrier or storage medium and/or may be provided via a communication connection, such as a wired or wireless network connection.

The computer program may for example be provided as an update for a controller of an existing wind turbine, e.g. for a wind turbine controller.

By such control system, wind turbine, or computer program, advantages similar to those outlined further above with respect to the method may be achieved.

In another aspect, the disclosure provides a wind turbine, comprising: a rotor comprising one or more blades, said one or more blades attached to a hub, forming a wind turbine rotor mounted to a nacelle which is in turn mounted on a tower, further comprising an electrical generator operationally connected to the wind rotor for converting wind energy into electrical energy, wherein said wind turbine comprises a control system adapted to carry out any one of the steps of any one of the embodiments of the examples of the method aforementioned.

The embodiments of the method of operating the wind turbine, are clearly and obviously combinable with the embodiments of the control system for implementing said method, and with the software instructions stored on a non-transitory computer-readable medium.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

To easily identify the discussion of any particular element or act, the most significant digit or digits in a reference number refer to the figure number in which that element is first introduced.
FIG.1 is a schematic drawing showing a wind turbine according to an embodiment.
FIG. 2 is a schematic drawing showing a wind turbine including a control system according to an embodiment.
FIG. 3 is a flow diagram illustrating a method of operating a wind turbine according to an embodiment.
FIG.4 is a further flow diagram illustrating the operating of a control system of a wind turbine according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

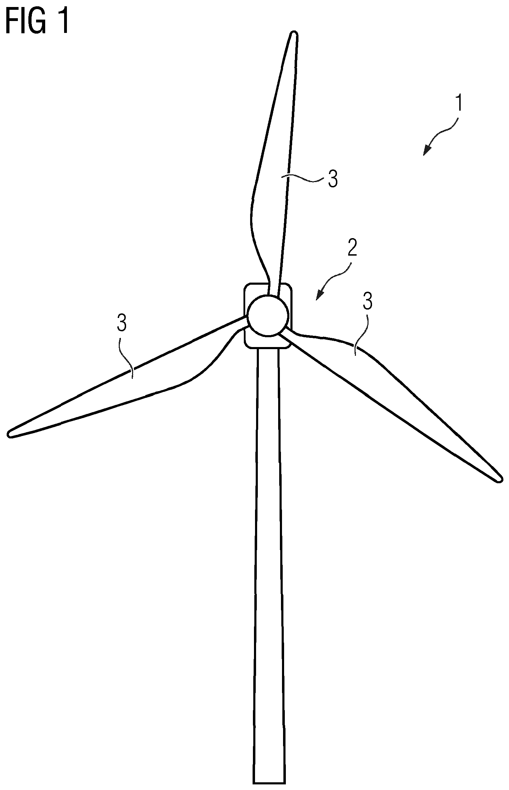

FIG. 1 shows a wind turbine 1 in an inactive operating mode, which comprises three rotor blades 3. The inactive operating mode may for example correspond to a situation with low wind conditions or when the power grid to which the wind turbine is coupled is saturated, and the wind turbine is thus not operated. The rotor one or more blades 3 form part of a wind turbine rotor 2 mounted to a nacelle, which is supported by a tower. In the inactive operating mode, the rotor one or more blades 3 of the wind turbine 2 may experience wind from various directions.

The inactive operating mode may correspond to an idle mode, e.g. an active idle mode or a passive idle mode of the wind turbine 1. In such a passive idle mode or active idle mode, the rotor 2 of the wind turbine 1 may not be locked and may be able to rotate during the inactive operating mode, in which the wind turbine is not providing electrical power to the power grid. Thus, as the wind impinges on the rotor one or more blades 2, the rotor 2 of the wind turbine 1 may rotate. The rotational direction of the movement of the rotor 2 due to the impinging wind may correspond to the operational rotating direction. It may however be also possible that the rotor 2 of the wind turbine 1 rotates in a direction that is reverse to the operating rotational direction upon impingement of the wind. This may be particularly the case when the wind impinges the rotor one or more blades on the trailing edge or if the rotor one or more blades are misaligned (e.g. pitched out position) and the wind impinges on the rotor one or more blades 3 in a 90-degree angle relative to the chord direction. Also, the yaw direction of the wind turbine rotor may be fixed and if the wind direction changes, the wind may impinge on the rotor from the side or even from behind, which may also occur in a downwind idle state.

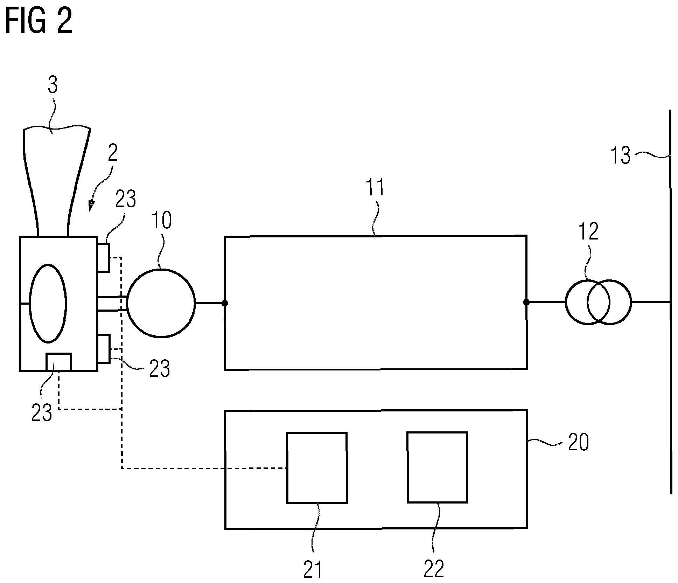

FIG. 2 schematically illustrates a wind turbine 1 including a control system 20 in a block diagram. The rotor 2 of the wind turbine 1 may be coupled to an electrical generator 10. The electrical generator 10 may be configured to convert the rotational energy of the rotor 2 of the wind turbine 1 into electrical power. The electrical generator 10 is coupled to a converter system 11. The converter system 11 is configured to convert the electrical power that is generated by the electrical generator 10 (e.g. in a full converter topology) and/or to control the power generation by the generator 10 (e.g. in a DFIG topology). The converter system 11 is coupled to a transformer 12. Transformer 12 is coupled to power grid 13 to exchange electrical power with the power grid 13. The power grid 13 may comprise the public power grid (utility grid).

The wind turbine 1 comprises the control system 20. The control system 20 comprises a memory 21 and a processing unit 22. Processing unit 22 may comprise any kind of processor, such as a microprocessor, an application-specific integrated circuit, a field-programmable gate array, a digital signal processor and the like. Memory 21 may comprise any kind of memory, such as RAM, ROM, EEPROM, Flash Memory, a harddisk drive, and the like. Control system 20 may comprise further components common to a computer system, such as respective input/output interfaces, a data communication bus for interconnecting the different components, and a user interface. Memory 21 may store control instructions to be executed by processing unit 22. Such control instructions may be configured to cause the control system 20 to perform any of the methods described herein. Control system 20 may for example comprise a wind turbine controller. Processing unit 22 and memory 21 may be distributed across multiple controllers, i.e. may include multiple processing units and memories.

The wind turbine 1 may comprise one or more sensing devices 23 installed in the hub of the wind turbine rotor, on a shaft, on a generator or on another component that rotates with the wind turbine rotor. By using the one or more sensing devices 23, the rotational speed and/or the rotational direction of the wind turbine rotor 2 may be determined. In the present example, the wind turbine 1 comprises three sensing devices 23, but it should be clear that more or fewer sensing devices may be employed. One may be provided for measuring the direction of rotation and two may be provided for measuring rotational speed of the wind turbine rotor, e.g. respective accelerometers. Using plural sensing devices 23 may be advantageous in situations in which a sensing device 23 may fail or malfunction. It may then be possible for the remaining sensing device(s) 23 to continue providing data. Furthermore, errors of individual measurements, e.g. due to mechanical vibrations or the like, may be compensated by averaging readings, resulting in a more accurate determination of the rotational speed and/or the rotational direction of the wind turbine rotor 2. Additionally, rapid speed fluctuations, e.g. during gusts, may be detected. Moreover, combining data from multiple sensing devices 23 may improve the overall ability to infer true rotational speed.

The three sensing devices 23 may comprise an optical encoder, an accelerometer installed in the hub of the wind turbine rotor, and/or a rotational speed sensor installed in the hub, on a shaft, on a generator or on another component that rotates with the wind turbine rotor.

The one or more sensing devices may in particular comprise an optical encoder, which may allow to monitor the rotational speed and/or rotational direction with minimal latency and low signal to noise ratio. Preferably, the one or more sensing devices comprises an incremental encoder. By using an incremental encoder particularly rotations comprising a low rotational speed may be sensed with a high resolution.

The control system may be coupled to the sensing devices 23 and may be configured to receive signals from the sensing devices 23. The control system may be further configured to control the operation of the wind turbine. In particular, it may be configured to switch the operation of the wind turbine into different operating modes, including a passive idle mode and an active idle mode. Furthermore, it may be configured to stop the rotation of the wind turbine rotor 2 or to apply a brake to the main shaft of the wind turbine rotor 2 or to a component which is coupled thereto. It may also be configured to control a pitch angle of the rotor one or more blades 3, e.g. to pitch the one or more blades out of the wind, for example into a stop position to stop the rotation of the wind turbine rotor.

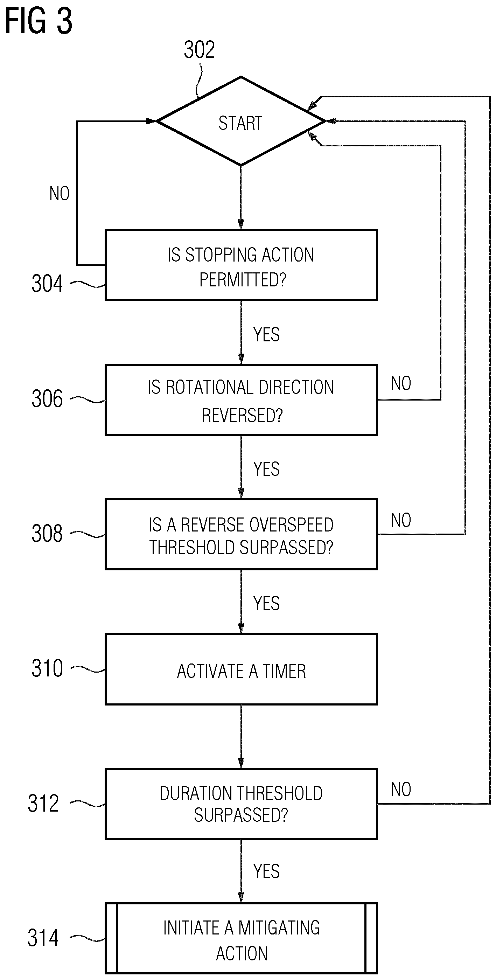

Referring now to the flowchart shown in FIG. 3, there is depicted an exemplary implementation of a method that may be carried out by the control system 20 of the wind turbine 2 of fig 2.

The steps illustrated are exemplary only, and additional steps or reordering may be provided without departing from the scope of the invention.

According to FIG.3, the method begins at step 302, which may be triggered automatically by a wind turbine controller or periodically during normal operation. In certain embodiments, the method restarts at this step whenever a monitoring interval elapses or following a reset in the turbine's control logic.

At step 304, the system checks whether a mitigating action is allowed (e.g. monitoring an operational state, in particular monitoring if the wind turbine is in inactive mode). This permission may be governed by multiple factors, such as: whether the turbine is in a normal operating mode such as idling or standstill operational mode (as opposed to maintenance or installation modes), and/or whether safety interlocks are engaged, or operator or supervisory control overrides.

If a stopping action is not permitted, the method typically returns to step 302, awaiting a change in conditions. If a stopping action is permitted, the process continues to step 306.

The process at step 306 involves measuring the rotational direction of the main rotor, for example, using rotor position sensors or encoders. If the rotational direction is not reversed, the system returns to step 302 to maintain normal monitoring. If the rotational direction is reversed, the method proceeds to step 308.

In step 308 of the method, it is checked if a reverse overspeed condition exists. More specifically, at step 308, the system evaluates whether the rotor's reverse rotation speed exceeds a defined overspeed threshold. This threshold is set based on engineering limits, safety regulations, or manufacturer guidelines. If the rotor speed is not above this threshold, the system may loop back to step 302 for continued observation. Otherwise, the method moves on to step 310.

Once a reverse overspeed condition is confirmed and stopping is permitted, step 310 initiates a timer. This timer tracks how long the main rotor remains in the reverse overspeed condition while still meeting any required permission criteria. Short or transient reverse overspeed events may not warrant a mitigating action, so the timer helps differentiate brief anomalies from sustained problematic conditions.

At step 312, the method compares the timer value to a predefined duration threshold. Only if the reverse overspeed condition (and permission to stop) persists beyond this threshold does the system decide to initiate a mitigating action, such as reducing the reverse rotational speed of the rotor or to forcibly halt the rotor. If the threshold is not met, the system may reset the timer or revert to step 302 for normal monitoring.

If the time threshold is exceeded while in reverse overspeed, step 314 executes a mitigating action or force a stop of the rotor. This mitigating may be carried out by any suitable mechanism, for example:
- Mechanical Braking (e.g., a disc brake or friction brake on the drive shaft),
- Aerodynamic Braking (e.g., adjusting blade pitch or deploying spoilers),
- Electrical Control (e.g., controlled generator torque).

In some embodiments, the mitigating action involves reducing the reverse rotor speed, not completely halting the rotor.

After the mitigation action is initiated or finalized, the method may return to step 302 to continue monitoring the rotor status, or it may transition to another routine within the control system (e.g., a recovery or diagnostic routine).

The detailed steps ensure that the wind turbine is protected from sustained reverse rotation at damaging speeds, in particular below cut-in speeds where typically there is no electrical shutdown from the converter, while also avoiding false triggers by implementing a timer threshold and verifying that a stopping action is indeed permitted. This approach enhances the operational safety of the turbine, reducing the likelihood of mechanical stress or damage.

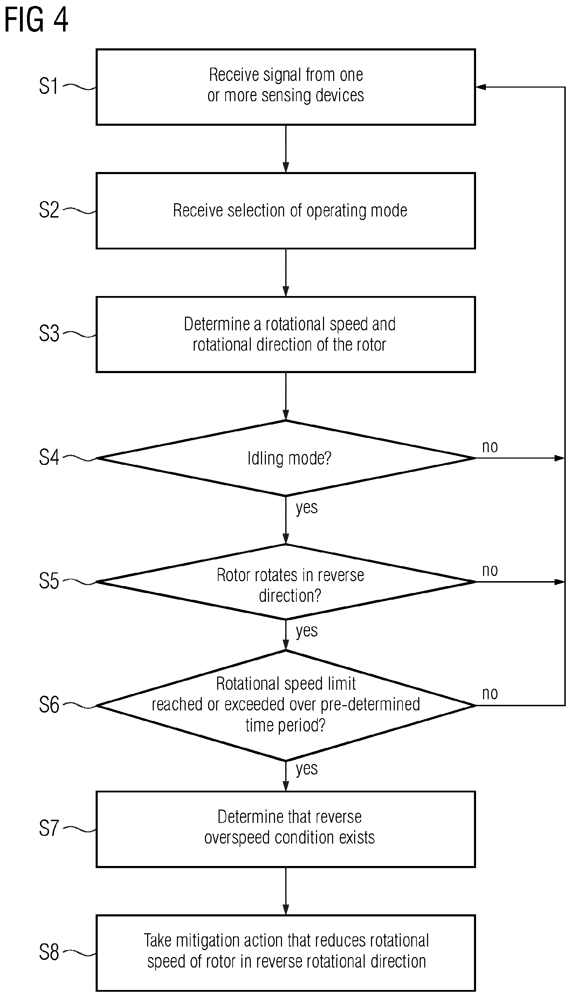

FIG. 4 shows a flow diagram that illustrates a further exemplary implementation of a method that may be carried out by the control system 20 of the wind turbine 1 of FIG. 2.

In step S1, the control system 20 receives a signal from the one or more sensing devices 23. In particular, the signal from the one or more sensing devices 23 may comprise the rotational speed and the rotational direction of the rotor 2.

In step S2, the control system 20 may receive a signal indicating which operation mode is the actual operating mode of the wind turbine 1. The operation mode checked may for example comprise a service mode or a power production mode.

In step S3, the control system 20 determines a rotational speed and a rotational direction of the rotor of the wind turbine 1 based on the signals received from the one or more sensing devices 23. Alternatively, instead of receiving respective signals from sensing devices in step S1, at least one of the signals indicating the rotational speed or the rotational direction may be obtained from a controller of the control system 20, e.g. from a wind turbine controller, a converter controller or the like which may employ respective measurements.

In step S4, it may be determined if the wind turbine 1 is operated in an idle mode. In particular, it may be determined if the wind turbine 1 is operated in the idle mode, or the service mode, or in any other mode. The service mode may for example correspond to an installation mode or a maintenance mode of the wind turbine 1. Thus, especially during installation or maintenance of the wind turbine 1, the control system 20 may not perform the subsequent steps of the method. Consequently, taking a mitigation action that may be hindering the service of the wind turbine 1 may be avoided. If it is determined that the wind turbine 1 is operated in a service mode or other operational mode (e.g. in which reversed rotation is allowed), the method may return to step S1 in which the control system 20 receives a signal from the one or more sensing devices 23. Therefore, unless a different operating mode is signaled which is different to a mode where a mitigation action can be triggered, the system proceeds. Otherwise, return to S1.

It is noted that in other implementations of the method, the steps S2 and S4 may be performed prior to steps S1 and S3, so that the receiving of the sensor signals and the determining of rotational speed and direction are only performed if the wind turbine operates in a mode where reversed rotation is not allowed, herein referred to as "inactive mode", the inactive mode being in particular an idle mode.

Thus, if the operating mode is the "inactive mode" (e.g. where reversed rotation is not allowed), the method continues at step S5, in which it may be determined if the rotor 2 of the wind turbine 1 is rotating in a reverse direction. A reverse direction may correspond to a direction that is opposite to the operating rotational direction of the wind turbine rotor 2. If it is determined that the wind turbine rotor 2 is not rotating in a reverse direction, the method may return to step S1 in which the control system receives a signal from the one or more sensing devices.

If reverse rotation is detected, the method continues in step S6, in which it is determined if a rotational speed limit is reached or exceeded over a predetermined time period. This may be determined by using a predetermined rotational speed limit and comparing the current rotational speed of the wind turbine rotor 2 to the predetermined rotational speed limit. The rotational speed limit may correspond to a rotational speed of the rotor 2 of less than 2 rpm, preferably less than 1 rpm, more preferably in a range between 0.01 and 0.5 rpm. It is further determined if the reverse rotational speed of the wind turbine rotor 2 exceeds the rotational speed limit over a predetermined time period. This may ensure that it is not determined that a reverse overspeed condition is present if the rotational speed limit is exceeded for only a very short period of time. This may for example be the case when a gust of wind hits the wind turbine 1 in otherwise low wind conditions and for an instance the rotational speed limit is reached. Thus, taking unnecessary mitigation actions may be avoided. If it is determined that the wind turbine rotor 2 is not operated above the rotational speed limit or not operated above the rotational speed limit for the predetermined amount of time, the method returns to step S1 in which the control system 20 receives a signal from the one or more sensing devices 23.

If it is determined in step S6 that the limit is reached or exceeded over the predetermined time period, the method continues at step S7, in which it is determined that a reverse overspeed condition exists.

In step S8, upon the determination that the reverse overspeed condition exists, a mitigation action is taken that reduces the rotational speed of rotor 2 in reverse rotational direction. The mitigation action may comprise one or a combination of switching the operation into a passive idle mode of the wind turbine 1 (for example if the wind turbine 1 is operated in the active idle mode and it is determined that the reverse overspeed condition exists), pitching of one or more blades 3 of the wind turbine rotor 2, stopping rotation of the wind turbine rotor 2, or applying a brake to a main shaft of the wind turbine rotor 2 or to a component which is coupled thereto.

Taking the mitigation action in step S8 may comprise a complete stop of the rotor 2.

Alternatively, taking the mitigation action may comprise bringing the rotational speed of the wind turbine rotor 2 below the rotational speed limit.

The mitigation action may be deactivated if the rotational speed is below the rotational speed limit, preferably for a preset time period. The method may then resume with step S1 in which the control system 20 receives a signal from the one or more sensing devices 23.

The deactivation of the mitigation action may comprise switching the operation of the wind turbine 1 for example to an active idle mode or a passive idle mode of the wind turbine 1. The operation may in particular return to the operating mode in which the wind turbine operated prior to activation of the mitigation action, or the wind turbine may be operated in a different mode after deactivation of the mitigation action.

By switching into the active idle mode or the passive idle mode of the wind turbine 1, the wind turbine rotor 2 may in particular be allowed to rotate. Thus, rotor lock-up may be prevented and risks of ice accumulation, debris entanglement, or asymmetric loading may be reduced. In the active idle mode, the wind turbine 1 may resume electricity generation within a short amount of time when wind speeds increase or grid demand returns. Furthermore, voltage and frequency may be maintained for seamless reconnection. By switching into an active idle mode when the mitigation action is deactivated, the wind turbine 1 may thus be activated more efficiently if power production is required.

The embodiments disclosed herein thus provide several benefits. By taking the mitigation action in response to detecting the reverse overspeed condition, the risk of damage to mechanical components may in particular be reduced. Furthermore, cut-in of the wind turbine in reverse direction may be avoided and the risk of damage to electrical equipment may be reduced.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling the operation of a wind turbine (1), in particular including conditions under which the wind turbine (1) is operating below a cut-in speed, wherein the wind turbine (1) comprises a wind turbine rotor (2) that is configured to rotate in an operating rotational direction during power production by the wind turbine (1), the method comprising:
determining a rotational speed of the wind turbine rotor (2) of the wind turbine (1),
determining a rotational direction of the wind turbine rotor (2),
identifying a reverse overspeed condition when the rotational speed of the wind turbine rotor (2) exceeds a predefined rotational speed limit and the rotational direction is reverse to the operating rotational direction, and
upon determining that a reverse overspeed condition exists, initiating a mitigation action that reduces the rotational speed of the wind turbine rotor in the reverse rotational direction.

2. The method of claim 1, further comprising:
determining whether the wind turbine (1) is in a mode in which a mitigation action is permitted,
wherein the mitigation action is carried out only if the wind turbine (1) is in said mode, in particular if persisting for a duration threshold while in the reverse overspeed condition.

3. The method of any one of claims 1 to 2, wherein it is identified that the reverse overspeed condition exists if the reverse rotational speed of the wind turbine rotor (2) exceeds the rotational speed limit over a threshold duration comprising a time interval.

4. The method of any one of claim 3, wherein the time interval is less than 10 s, preferably less than 7 s, more preferably lies within a range between 2 and 6 s.

5. The method according to any one of claims 1 to 4, wherein the method comprises operating the wind turbine (1) in an inactive operating mode in which the wind turbine rotor (2) is not rotated to generate power, wherein the identifying of the reverse overspeed condition is performed in the inactive operating mode.

6. The method according to any one of claims 1 to 5, wherein the rotational speed limit corresponds to a rotational speed of less than 2 rpm, preferably less than 1 rpm, more preferably lies within a range between 0.01 and 0.5 rpm.

7. The method according to any one of claims 1 to 6, wherein taking the mitigation action comprises bringing the rotational speed of the wind turbine rotor (2) below the rotational speed limit.

8. The method of any one of claims 1 to 7, wherein taking the mitigation action comprises a complete stop of the rotor (2).

9. The method of any one of claims 1 to 8, wherein the mitigation action comprises one or a combination:
- switching the operation into an idle mode of the wind turbine (1), in particular an active or passive idle mode,
- applying a mechanical brake to a main shaft of the wind turbine rotor or to a component which is coupled thereto,
- pitching one or more blades (3) of the wind turbine rotor, and/or
- exerting a generator torque.

10. The method of any one of claims 1 to 9, further comprising generating an alarm signal or diagnostic notification upon identifying the reverse overspeed condition and/or upon initiating a mitigation action.

11. The method any one of claims 1 to 10, being carried out only when the wind turbine rotor speed is below a cut-in speed, in particular in an inactive mode not producing power.

12. A control system (20) configured to control the operation of a wind turbine, wherein the wind turbine (1) comprises a wind turbine rotor, wherein the control system (20) is configured to perform the method of any one of claims 1 to 11.

13. Wind turbine, comprising: one or more blades (3), said one or more blades (3) attached to a hub, forming a wind turbine rotor (2) mounted to a nacelle which is in turn mounted on a tower, further comprising an electrical generator operationally connected to the wind turbine rotor (2) for converting wind energy into electrical energy, said wind turbine (1) comprising the control system (20) of claim 12.

14. Method for upgrading an existing wind turbine, comprising providing and implementing a control system (20) of claim 12.

15. A computer program for controlling the operation of a wind turbine (1) that comprises a wind turbine rotor (2), wherein the computer program comprises control instructions which, when executed by a processing unit of a control system that controls the operation of the wind turbine, cause the processing unit to perform the method of any one of claims 1 to 11.
